# EUROPÄISCHE PATENTSCHRIFT

(11) **EP 1 306 572 B1**
(45) Veröffentlichungstag und Bekanntmachung des Hinweises auf die Patenterteilung: **19.10.2005**
(21) Anmeldenummer: 02017632.7
(22) Anmeldetag: 06.08.2002
(51) Int. Cl.: F16D 21/06, F16D 13/70

(54) **Eingangsseitig zentral an einer Drehwelle oder Drehkomponente angebundene Kupplungseinrichtung in einem Kraftfahrzeug-Antriebsstrang**
Motor vehicle drive train with clutch connected centrally on the crank shaft
Transmission pour véhicule automobile avec embrayage centralement fixé sur le vilebrequin

(30) Priorität: 09.10.2001 DE 10149704
(43) Veröffentlichungstag der Anmeldung: 02.05.2003
(73) Patentinhaber: ZF Sachs AG, 97424 Schweinfurt (DE)
(72) Erfinder: Zink, Georg, Dipl.-Ing.(FH), 97447 Gerolzhofen (DE); Orlamünder, Andreas, Dipl.-Ing., 97422 Schweinfurt (DE); Pagels, Olaf, 97493 Bergrheinfeld (DE); Vogt, Sebastian, Dipl.-Ing., 97616 Bad Neustadt (DE); Heiartz, Markus, Dipl.-Ing., 97084 Würzburg (DE)

(56) Entgegenhaltungen:
- DE-C- 689 437
- FR-A- 1 328 670
- US-A- 5 279 183
- US-A- 5 524 739
- US-A- 5 799 766
- US-A- 5 901 825
- SCHULZ-ANDRES H: "DER EINSATZ VON MODULKUPPLUNGEN IN ZUKUNFTIGEN PERSONENKRAFTWAGEN THE USE OF MODULAR CLUTCHES IN FUTURE PASSENGER CARS" MTZ MOTORTECHNISCHE ZEITSCHRIFT, FRANCKH'SCHE VERLAGSHANDLUNG,ABTEILUNG TECHNIK. STUTTGART, DE, Bd. 55, Nr. 9, 1. September 1994 (1994-09-01), Seiten 488,490-491, XP000461873 ISSN: 0024-8525

## Beschreibung

Die Erfindung betrifft nach einem speziellen Aspekt einen Kraftfahrzeug-Antriebsstrang mit einer zwischen einer Antriebseinheit und einem Getriebe angeordneten Mehrfach-Kupplungseinrichtung, insbesondere Doppel-Kupplungseinrichtung, zur Momentenübertragung zwischen der Antriebseinheit und dem Getriebe, wobei die Kupplungseinrichtung eine einer ersten Getriebeeirigangswelle zugeordnete erste Kupplungsanordnung und eine einer zweiten Getriebeeingangswelle zugeordnete zweite Kupplungsanordnung umfasst, wobei die Getriebeeingangswellen im Wesentlichen koaxial zu einer Drehachse der Kupplungseinrichtung angeordnet sind, wobei eine Eingangsseite der Kupplungseinrichtung über eine Momentenübertagungsanordnung mit einem Koppelende einer Abtriebswelle der Antriebseinheit direkt oder indirekt (unmittelbar oder mittelbar) gekoppelt ist, und wobei die Momentenübertragungsanordnung einen radial äußeren Anbindungsbereich zu Anbindung an der Kupplungseinrichtung und einen radial inneren Anbindungsbereich zur direkten oder indirekten Anbindung an dem Koppelende aufweist. Es wird insbesondere an eine auch nur kurz als Doppelkupplung bezeichenbare Doppel-Kupplungseinrichtung gedacht, die nach der Reibscheibenbauart ausgeführt ist und pro Kupplungsanordnung wenigstens eine als Reibscheibe dienende Kupplungsscheibe aufweist, mit einer zugeordneten Anpressplatte, durch welche wenigstens ein Reibbereich der Kupplungsscheibe gegen einen mit einer Gehäuseanordnung der Kupplungseinrichtung drehbaren Widerlagerbereich pressbar ist. Es ist durchaus aber auch denkbar, dass die im Folgenden vorgestellten Erfindungsgedanken auch bei anderen Kupplungsbauarten vorteilhaft anwendbar sind. Die Momentenübertragungsanordnung kann integraler, ggf. einteiliger Bestandteil eines die Kupplungseinrichtung umfassenden Kupplungsmoduls sein oder kann eine gegenüber einem solchen Modul gesonderte Komponente oder Baugruppe sein, beispielsweise in der Art einer Flexplatte.

Ein Kraftfahrzeug-Antriebsstrang nach dem Oberbegriff des Anspruchs 1 ist aus FR-A-1 328 670 bekannt.

Insbesondere beiDoppelkupplungssystemen ergeben sich infolge der relativ komplexen Druckplattengeometrien hohe Bauteilgewichte und enge Bauräume. Die axial zur Verfügung stehenden Bauräume erfordern sehr kompakte Aufbauten. Durch die hohen Bauteilgewichte gewinnt das Resonanzverhalten der Antriebseinheit merklich an Bedeutung. Auch sollten aufgrund von relativ komplexen Druckplattengeometrien die Kupplungsscheiben in der Regel vormontiert zwischen Druckplatte und zugeordneter Anpressplatte sitzen. Zur Anbindung der Kupplungseinrichtung an der Abtriebswelle wird häufig eine Momentenübertragungsanordnung in Form einer Flexplatte verwendet, die durch mehrere auf einem Teilkreis angeordnete Schrauben an einem Koppelende der Abtriebswelle oder - im Falle eines an der Abtriebswelle angebrachten Schwungrads (ggf. Zwei-Massen-Schwungrads), an dem Schwungrad angebracht ist. Dies wird zum Beispiel in der US 5 901 825 A gezeigt. Hier ist eine eine Einscheibenkupplung mittels einer Flexplatte und einem Zweimassenschwungrad an der Kurbelwelle eines Motors angebunden. Diese dort gezeigte Baueinheit beinhaltend eine Flexplatte zeigt jedoch bei hohen Gewichten der Kupplungseinheit eine geringe Reduzierungsneigung der durch die Kurbelwelle des Motors angeregten Schwingungen.
Weiterhin muss bedacht werden, dass sobald die Kupplungsscheiben vormontiert in der Kupplungseinrichtung angeordnetsind, so ist es in der Regel nicht mehr möglich, bei einer an der Antriebseinheit angeordneten Kupplungseinrichtung an die auf dem Teilkreis angeordneten Schrauböffnungen heranzukommen, so dass es nicht möglich ist, eine die Flexplatte und die eigentliche Kupplungseinrichtung umfassende, vormontierte Baueinheit als Baueinheit an der Antriebseinheit zu montieren, d. h. die Kupplungseinrichtung unter Vermittlung der Flexplatte direkt oder indirekt (unmittelbar oder mittelbar) an der Abtriebswelle (ggf. Kurbelwelle) der Antriebseinheit anzubinden. Es ist deshalb erforderlich, die eigentliche Kupplungseinrichtung, die ggf. als Baueinheit vormontiert ist, und die Flexplatte unabhängig voneinander zu montieren, beispielsweise derart, dass zuerst die Flexplatte an der Abtriebswelle angebunden wird und danach die Kupplungseinrichtung an der Flexplatte angebracht wird, bevor dann die Antriebseinheit mit dem Getriebe verbunden wird, oder derart, dass zuerst an der Antriebseinheit die Flexplatte und am Getriebe die Kupplungseinrichtung montiert wird und dann die Antriebseinheit und das Getriebe sowie die Flexplatte und die Kupplungseinrichtung verbunden werden. Jedenfalls ist es erforderlich, die Kupplungseinrichtungs-Baueinheit einerseits und die Flexplatte (allgemein die Momentenübertragungsanordnung) als separate Baugruppen ans Band des Kraftfahrzeugherstellers anzuliefern und die geschilderten Montageschritte durchzuführen. In der Regel wird man das Kupplungsmodul zuerst auf die Getriebeeingangswellen aufstecken sowie die Flexplatte an der Abtriebswelle (insbesondere Kurbelwelle) montieren, dann das Getriebe und die Antriebseinheit (Motor) verbinden und dann nachträglich das Kupplungsmodul an der Flexplatte durch mindestens eine Öffnung in der Getriebegehäuseglocke nachträglich von außen mit beispielsweise mindestens drei über den Unfang verteilten Schrauben oder dergleichen befestigen. Dieser Montagevorgang ist sehr aufwendig und überdies fehlerträchtig, da die ordnungsgemäße Montage, insbesondere die ordnungsgemäße Verbindung der Flexplatte mit der Kupplungseinrichtung, schwer überprüfbar ist.

Demgegenüber wäre es sehr vorteilhaft, wenn man eine die eigentliche Kupplungseinrichtung als auch die Momentenübertragungsanordnung (ggf. Flexplatte oder Flexplattenanordnung) umfassende, vormontierte Einbau-Baueinheit als Baueinheit in den Antriebsstrang eingliedern könnte, die eine hohe Entkoppelungsgüte gegenüber systemangeregten Schwingungen aufweist.

Zur Lösung dieser Aufgabe wird betreffend den eingangs angesprochenen Antriebsstrang bzw. dessen Momentenübertragungsanordnung vorgeschlagen, dass die Doppel-Kupplungseinrichtung über eine Flexplattenanordnung an der Antriebsachse einer Antriebseinheit angebunden ist wobei die Flexplattenanordnung ein äußeres Flexplattenteil 90 und ein inneres Flexplattenbauteil 92 aufweist und über als Federn ausgeführte Verbindungsanordnungen sowohl eine Verkippung dieser Teile ermöglicht als auch eine axial elastische Weichheit oder Nachgiebigkeit aufweist.

Weitere vorteilhafte Ausgestaltungen der Erfindung sind in den Unteransprüchen aufgeführt.

Die Erfindung wird anhand der folgenden Figuren näher erläutert:

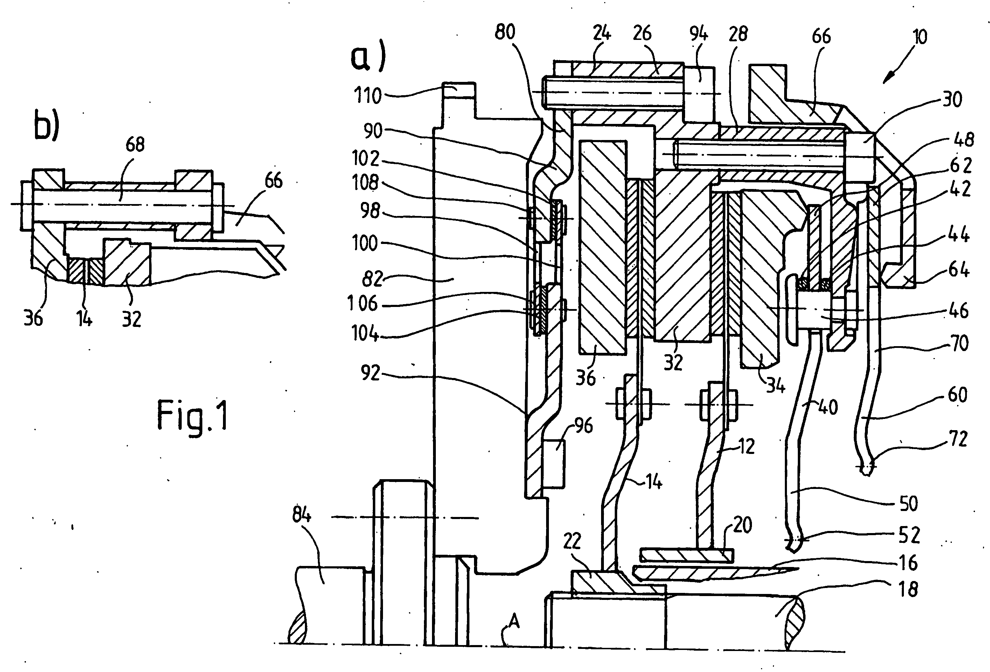

- Fig. 1: zeigt zur Erläuterung verschiedener Aspekte der Erfindung (einschließlich vorteilhafter Weiterbildungsmöglichkeiten der Erfindung) in Fig. 1a) in einer teilgeschnittenen Ansicht ein erstes Ausführungsbeispiel einer Doppelkupplung in Reibscheibenbauart, die über eine axial- und taumelweiche Flexplattenanordnung mit der Abtriebswelle einer Antriebseinheit (insbesondere einer Brennkraftmaschine) in Momentenübertragungsverbindung steht, wobei Teilfigur a) die Doppelkupplung gemäß einer ersten, eine Drehachse enthaltenen Schnittebene zeigt und Teilfigur b) ein Ausschnitt einer entsprechenden Schnittansicht gemäß einer anderen, die Drehachse enthaltenen Schnittebene ist.
- Fig. 2: zeigt eine axiale Ansicht auf die taumelweiche und axialweiche Flexplattenanordnung des Ausführungsbeispiels der Fig. 1.
- Fig. 3: zeigt die Flexplattenanordnung der Fig. 2 in einer perspektivischen Darstellung in einer Vorderansicht (Teilfigur 3a) und in einer Rückansicht (Teilfigur 3b).
- Fig. 4: zeigt eine Ausführungsvariante der Anordnung der Fig. 1.
- Fig. 5: zeigt ein weiteres Ausführungsbeispiel einer Doppelkupplung der Reibscheibenbauart mit einem zugehörigen, mit der Doppelkupplung zu einer Baueinheit integrierten Betätigungsmodul.
- Fig. 6: zeigt eine Ausführungsvariante der Anordnung gemäß Fig. 5.
- Fig. 7: zeigt eine erfindungsgemäße, treffend als Flexplattenanordnung bezeichenbare Momentenübertragungsanordnung zur Zentralanbindung einer Kupplungseinrichtung an der Abtriebswelle einer Antriebseinheit in zwei perspektivischen Darstellungen entsprechend Fig. 3.
- Fig. 8: zeigt eine mittels der Flexplattenanordnung der Fig. 7 an einer Kurbelwelle angebundenen Doppelkupplung der Reibscheibenbauart.
- Fig. 9: zeigt in zwei perspektivischen Darstellungen eine Ausführungsvariante der Flexplattenanordnung der Fig. 7.
- Fig. 10: zeigt eine mittels der Flexplattenanordnung der Fig. 9 an einer Kurbelwelle angebundene Doppelkupplung der Reibscheibenbauart.
- Fig. 11: zeigt in zwei perspektivischen Darstellungen eine weitere Ausführungsvariante der Flexplattenanordnung der Fig. 7.
- Fig. 12: zeigt eine mittels der Flexplattenanordnung der Fig. 11 an einer Kurbelwelle angebundene Doppelkupplung der Reibscheibenbauart.
- Fig. 13: zeigt eine auf herkömmliche Weise an einer Kurbelwelle angebundene Flexplatte mit in die Flexplatte eingearbeitetem Anlasserzahnkranz.
- Fig. 14: zeigt eine nach dem Hauptaspekt der Erfindung ausgeführte Ausführungsvariante der Flexplatte der Fig. 13.

Im Folgenden werden verschiedene Aspekte der Erfindung einschließlich vorteilhafter Weiterbildungsmöglichkeiten anhand von speziellen Ausführungsbeispielen, nämlich so genannten Doppelkupplung der Reibscheibenbauart, näher erläutert, wobei es sich bei den Ausführungsbeispielen der Fig. 1, 4, 5, 8, 10 und 10 um Doppelkupplungen des NORMALERWEISE-GESCHLOSSEN-Typs handelt, die gedrückt betätigt werden. Die Erfindungsaspekte sind aber unabhängig von dem Kupplungstyp und der Betätigungsart. Die verschiedenen Erfindungsaspekte können sowohl bei Einfachkupplungen (mit nur einer Kupplungsanordnung) als auch Doppelkupplungen (bzw. allgemein Mehrfach-Kupplungseinrichtungen; mit zwei oder mehreren Kupplungsanordnungen) ausgeführt werden, und zwar sowohl bei Kupplungen des NORMALERWEISE-OFFEN-Typs als auch bei Kupplungen des NORMALERWEISE-GESCHLOSSEN-Typs, und unabhängig von der Betätigungsart, nämlich sowohl bei Kupplungen der gedrückten Betätigungsart als auch bei Kupplungen der gezogenen Betätigungsart. Zumindest einige der Aspekte und Weiterbildungsmöglichkeiten der Erfindung, insbesondere die Zentralanbindung sowie die taumelweiche und axialweiche Anbindung der Kupplung (Kupplungseinrichtung) an der Abtriebswelle der Antriebseinheit unter Vermittlung einer erfindungsgemäßen Momentenübertragungsanordnung, speziell einer erfindungsgemäßen Flexplattenanordnung, kann auch im Zusammenhang mit nasslaufenden Einfach- und Doppelkupplungen (allgemein Mehrfachkupplungen) der Lamellenkupplungs-Bauart von Interesse sein.

Fig. 1 zeigt eine Doppelkupplung 10 der Reibscheibenbauart, die eine erste Kupplungsscheibe 12 einer ersten Kupplungsanordnung und eine zweite Kupplungsscheibe 14 einer zweiten Kupplungsanordnung aufweist. Die erste Kupplungsscheibe 12 steht' mit einer als Hohlwelle ausgeführten ersten Getriebeeingangswelle 16 und die zweite Kupplungsscheibe 14 steht mit einer sich koaxial durch die erste Getriebeeingangswelle 16 erstreckenden zweiten Getriebeeingangswelle 18 auf an sich bekannte Art und Weise in Momentenübertragungsverbindung. Die Kupplungsscheiben weisen beispielsweise eine Koppelnabe 20 bzw. 22 auf, die auf die betreffende Getriebeeingangswelle aufgeschoben ist und mit dieser über Mitnahmeformationen drehfest gekoppelt ist.

Die Doppelkupplung 10 weist eine Gehäuseanordnung 24 auf, die ein erstes Gehäuseteil 26 und ein zweites Gehäuseteil 28 umfasst, die durch Schraubbolzen 30 miteinander verbunden sind.

Ein beidseitig Reibbeläge tragender ringförmiger Abschnitt der ersten Kupplungsscheibe 12 ist axial zwischen einer ein Widerlager für die Kupplungsscheibe bildenden Druckplattenabschnitt 32 des Gehäuseteils 26 und einer in der Gehäuseanordnung axial beweglich gehaltenen ersten Anpressplatte 34 angeordnet. Die zweite Kupplungsscheibe 14 ist mit ihrem beidseitig Reibbeläge tragenden Ringbereich axial zwischen dem ein Widerlager für die Kupplungsscheibe bildenden Druckplattenabschnitt 32 und einer in der Gehäuseanordnung axial beweglich gehaltenen zweiten Anpressplatte 36 gehalten. Die beiden Anpressplatten sind jeweils auf an sich bekannte Art und Weise durch Tangentialfedern (Tangentialblattfedern) oder dergleichen in der Gehäuseanordnung gehalten und jeweils in Öffnungs- oder Ausrückrichtung federvorgespannt.

Auf die erste Anpressplatte 34 wirkt eine erste Teller- oder Membranfeder 40, die unter Vermittlung von Stützringen 42, 44 und Zentrierbolzen 46 an einem nach radial innen vorspringenden Ringabschnitt des zweiten Gehäuseteils 28 abgestützt ist. Fig. 1 zeigt die erste Membranfeder in einem unbetätigten Zustand. In diesem Zustand wirkt die Membranfeder 40 mit ihrem Ringabschnitt 48 in Schließ- oder Einrückrichtung auf die erste Anpressplatte 34, so dass diese gegen die erste Kupplungsscheibe 12 mit maximaler Anpresskraft angepresst ist, die Kupplungsscheibe also maximal zwischen dem Widerlager der Druckplatte 32 und der Anpressplatte 34 eingespannt ist. Die erste Kupplungsanordnung ist also vollständig eingerückt. Zum Ausrücken der ersten Kupplungsanordnung sind die Betätigungszungen oder Betätigungshebel 50 der Membranfeder 40 durch Anlegen entsprechender axialer Kräfte an deren Endabschnitten 52 in Richtung zur Antriebseinheit, also in Fig. 1 nach links, auszulenken. Die Membranfeder schwenkt dann zwischen den ein Schwenklager bildenden Stützringen 42 und 44, so dass die auf die Anpressplatte 34 wirkenden Axialkräfte reduziert werden und die Anpressplatte 34 unter der Wirkung ihrer Federvorspannung sich axial nach rechts bewegen kann bzw. die auf die Kupplungsscheibe 34 wirkenden Einspannkräfte reduziert werden.

Der zweiten Anpressplatte 36 ist eine zweite Membranfeder oder Tellerfeder 60 zugeordnet, deren Ringabschnitt 62 zwischen Abstützabschnitten des ersten Gehäuseteils 28 und einem ringförmigen, einen definierten Abstützradius bildenden Abstützabschnitt 64 eines als Ringteil ausgeführten Kraftübertragerglieds 66 eingespannt ist, welches über als Zuganker dienende Verbindungsbolzen 68 mit der zweiten Anpressplatte 36 verbunden ist. Im in Fig. 1 gezeigten Zustand drückt die zweite Membranfeder 60 das Kraftübertragerglied 64 in Richtung zum Getriebe, also in Fig. 1 nach rechts, wodurch die zweite Anpressplatte 36 gegen die zweite Kupplungsscheibe 14 gedrückt wird und die Kupplungsscheibe dementsprechend zwischen der zweiten Antriebsplatte 36 und der Druckplatte 32 axial eingespannt ist. Fig. 1 zeigt in Bezug auf die zweite Kupplungsanordnung ebenfalls den Zustand maximaler Einrückung. Zum Ausrücken der zweiten Kupplungsanordnung werden die Betätigungszungen oder Betätigungshebel 70 durch Anlegen entsprechender Axialkräfte an deren Endabschnitten 72 in Richtung zur Antriebseinheit, in Fig. 1 also nach links, ausgelenkt.

Die Doppelkupplung 10 ist beim Ausführungsbeispiel der Fig. 1 über eine im Folgenden kurz als Flexplatte bezeichnete Flexplattenanordnung 80 an einem Zwei-Massen-Schwungrad 82 angebunden, welches selbst an der Abtriebswelle 84 einer Antriebseinheit, insbesondere einer Brennkraftmaschine, angekoppelt ist. Auf ein Zwei-Massen-Schwungrad oder ein einfaches Schwungrad kann unter Umständen verzichtet werden, insbesondere deswegen, weil die Druckplatte 32 und die Anpressplatten 34 und 36 selbst eine vergleichsweise große Drehmasse bilden, die insoweit als Schwungmasse dienen könnte. Insbesondere kann diese Drehmasse der Doppelkupplung eine einfache (starre) Schwungmasse oder - wenn ein Zwei-Massen-Schwungrad gewünscht ist - die sekundäre Drehmasse des Zwei-Massen-Schwungrads bilden.

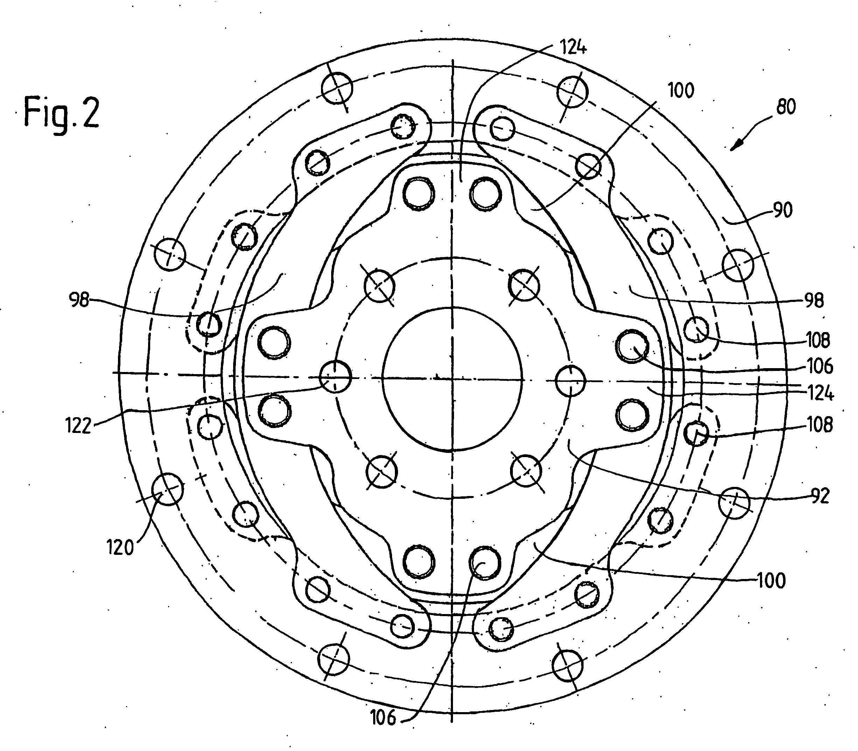

Die in Fig. 2 in einer axialen Ansicht gezeigte Flexplatte 80 weist ein ringförmiges Außenteil 90 und ein inneres Platten-, Naben- oder Ringteil 92 auf. Das äußere Ringteil 90 ist über Verbindungsschrauben 94 mit dem ersten Gehäuseteil 26 verbunden. Das innere Flexplattenteil 92 ist über Verbindungsschrauben 96 mit dem Zwei-Massen-Schwungrad 82 oder, wenn auf das Zwei-Massen-Schwungrad verzichtet wird, mit der Abtriebswelle 84, insbesondere Kurbelwelle 84, verbunden.

Das radial äußere Flexplattenteil 90 und das radial innere Flexplattenteil 92 sind über elastische streifenförmige Verbindungselemente 98 und 100, beispielsweise über Blattfedern 98 und 100, miteinander verbunden, wobei zwischen dem äußeren Flexplattenteil 90 und dem jeweiligen Verbindungselement 98 bzw. 100 oder/und zwischen dem inneren Flexplattenteil 92 und dem jeweiligen Verbindungselement 98 bzw. 100 Dämmmaterial, beispielsweise in der Art einer Unterlegscheibe, angeordnet sein kann, wie in Fig. 1 bei 102 und 104 gezeigt ist. Es können beispielsweise viskoelastische Dämmelemente zwischen den genannten Flexplattenteilen angeordnet werden. Die Verbindung zwischen den genannten Flexplattenteilen, also zwischen dem radial äußeren Flexplattenteil 90 und den Verbindungselementen 98, 100 und zwischen dem radial inneren Flexplattenteil 92 und den Verbindungselementen 98, 100 kann durch Vernieten hergestellt sein. 106 und 108 bezeichnen in Fig. 1 entsprechende Nietelemente.

Das äußere Flexplattenteil 90 und das innere Flexplattenteil 92 können vorteilhaft (insbesondere kostengünstig) als Blechteile ausgeführt sein. Die Verbindungselemente 98, 100 können beispielsweise als dünne.Stahlblechstreifen oder Blattfedern ausgeführt sein. Man kann für die Flexplattenanordnung ähnliche oder analoge Ausgestaltungen vorsehen, wie sie schon für Kupplungsscheiben (so genannte "taumelweiche Kupplungsscheiben") und betreffend die Anbindung von Drehmomentwandlern an einem Antriebsglied vorgeschlagen wurden.

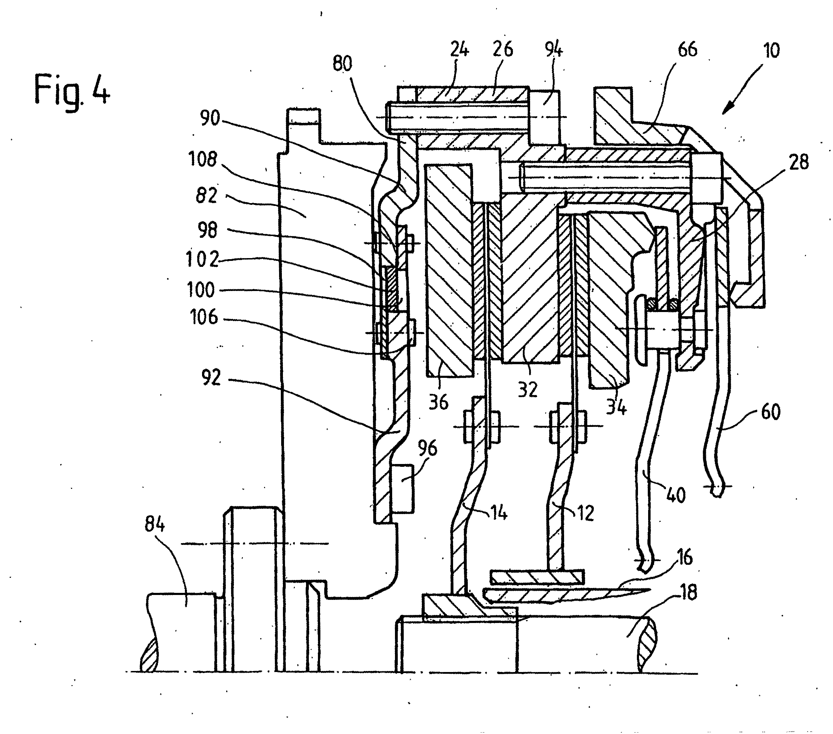

Die Flexplattenanordnung 80 weist eine "gezielte" axiale und eine Verkippung des äußeren Flexplattenteils 90 relativ zum inneren Flexplattenteil 92 ermöglichende elastische Nachgiebigkeit oder Weichheit auf, wodurch Axial- und Taumelbewegungen der Kurbelwelle 84 von der Doppelkupplung 10 ferngehalten werden können. Dies ist insbesondere für eine Doppelkupplung von besonderer Bedeutung, da dieser gegenüber einer Einfachkupplung eine größere Drehmasse aufweist. Bei der geringen axialen Nachgiebigkeit einer herkömmlichen ("starren") Flexplatte besteht die Gefahr, dass ein als Antriebseinheit verwendeter Verbrennungsmotor mit im Betrieb auftretenden Anregungen eine Eigenfrequenz des schwingfähigen Systems (Flexplatte + Kupplung) bezüglich axialer Schwingungen und ggf. bezüglich Schwingungen in "Kipprichtung", also Taumelschwingungen, trifft. Durch die axial weiche Flexplattenanordnung kann das schwingfähige System soweit verstimmt werden, dass eine schwingungstechnische Entkopplung bezüglich Axialschwingung bzw. Axialvibrationen (allgemein axiale Anregungen) sowie ggf. bezüglich Taumelbewegungen bzw. den genannten "Taumelschwingungen" von der Antriebseinheit her erreicht wird. Das System kann gewissermaßen bereits ab Leerlaufdrehzahl im "überkritischen Betrieb" arbeiten. Die vorteilhaft vorsehbaren Dämpfungselemente, die gemäß Fig. 1 gewissermaßen "in Reihe" zu den anderen Elementen der Flexplattenanordnung geschaltet sind, tun ihr Übriges, um axiale Schwingungen und ggf. Taumelschwingungen des genannten schwingfähigen Systems zu vermeiden bzw. zumindest nennenswert zu reduzieren. Es ist auch eine "Parallelschaltung" von Dämpfungselementen zu den Verbindungselementen möglich, wie dies anhand von Fig. 4 noch näher erläutert wird.

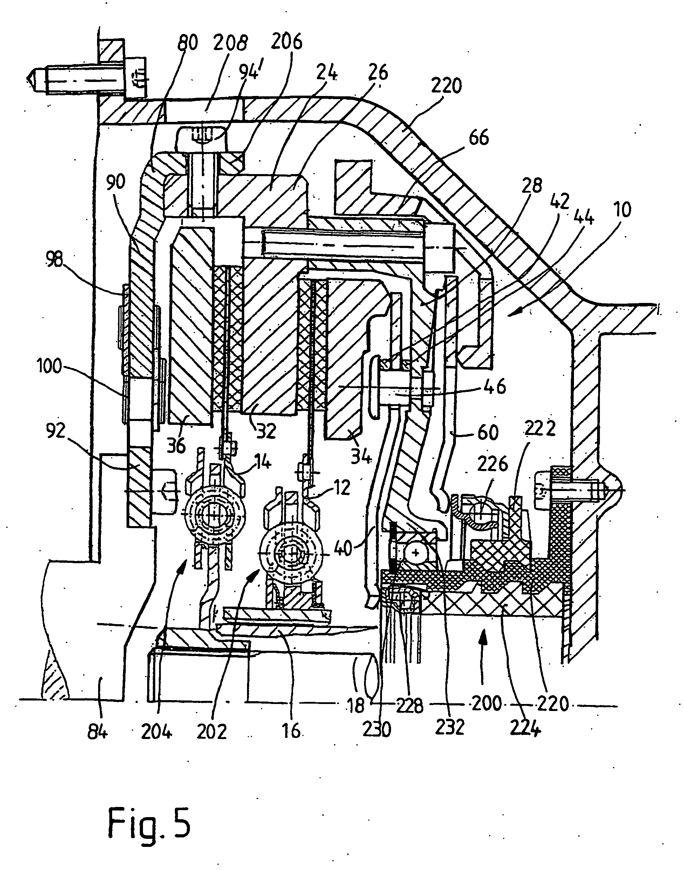

Neben der Entkopplung von Axialbewegungen oder/und von Taumelbewegungen ist die Flexplattenanordnung 80 auch insoweit sehr vorteilhaft, als dass die hierdurch gegebene axiale Nachgiebigkeit eine "Zwangspassung" beim passgerechten Einbau der Kupplung, insbesondere eines die Kupplung und ein zugehöriges Betätigungsmodul umfassenden Baueinheit, in einem Antriebsstrang vermieden werden kann. Betreffend eine Doppelkupplung der Reibscheibenbauart kann hierzu Folgendes angemerkt werden. Aus Sicherheitsgründen (sicheres Verhindern eines blockierenden Getriebes bei einem Ausfall des Betätigungssystems) sollte mindestens eine der beiden Kupplungsanordnungen nach dem NORMALERWEISE-OFFEN-Prinzip ausgeführt sein, die Kupplungsanordnung bzw. die Kupplungsanordnungen sollte(n) also über eine in die Kupplung eingebrachte Axialkraft aktiv geschlossen werden. Damit diese Axialkraft nicht als ständige Lagerbelastung auf dem Kurbelwellen-Axiallager des Verbrennungsmotors anliegt, empfiehlt es sich, den Axialkraftfluss innerhalb des Kupplungsmoduls zu schließen (vgl. Ausführungsbeispiel der Fig. 5). Hierzu kann das Kupplungsmodul und das Betätigungsmodul miteinander verbunden werden, wobei vorzugsweise ein das Kupplungsmodul und das Betätigungsmodul umfassendes Komplettmodul bei der Eingliederung in den Antriebsstrang entweder motorseitig bzw. getriebeseitig vormontiert wird, im Gegensatz zu herkömmlichen Lösungen, bei denen meist das Kupplungsmodul motorseitig angeordnet und das Betätigungsmodul getriebeseitig fixiert wird und dann nach der Montage des Getriebes am Motor nachträglich miteinander verbunden werden. Das hier angesprochene Konzept der Vormontage eines Komplettmoduls bedingt, dass die axiale Länge des Komplettmoduls vorab definiert ist, jedenfalls dann, wenn keine aufwendigen zusätzlichen Maßnahmen getroffen wurden, die eine Anpassung der axialen Baulänge ermöglichen. Da zudem der axiale Bauraum im Antriebsstrang, insbesondere die axiale Länge der Getriebeglocke, geometrisch vorgegeben ist, könnte aufgrund von Fertigungstoleranzen bei einem passgerechten Einbau eine Zwangspassung auftreten. Diese kann durch die durch die Flexplattenanordnung des Ausführungsbeispiels gegebene axiale Nachgiebigkeit ausgeglichen werden.

Nachzutragen ist, dass man sowohl motorseitig als auch kupplungsseitig rotationsunsymmetrisch angeordnete Befestigungsbohrungen vorsehen kann, um eine Soll-Drehstellung der Kupplung 10 an der Abtriebswelle der Antriebseinheit zu gewährleisten, so dass beispielsweise ein auf den Anlasserzahnkranz 110 ansprechender Signalgeber die Drehstellung der Kurbelwelle 84 feststellen kann, etwa zur Erfassung des oberen Totpunkts. Die Doppelkupplung 10 gemäß Fig. 1 hat mit ihren Druck- und Anpressplatten beispielsweise ein Gewicht von 13 bis 14 kg. Wie schon erwähnt, könnten im normalen Fahrbetrieb Axialschwingungen auftreten, wenn eine herkönimliche (zu harte) Flexplattenanbindung gewählt werden würde. Wichtig ist eine besonders weiche Ausbildung der Anbindung der Kupplung an der Abtriebswelle, um die schon erläuterte Entkopplung vorzusehen und vorzugsweise die Verstimmung des schwingfähigen Systems gegenüber einer Anregungsfrequenz vom Motor (etwa Zündimpuls des letzten Zylinders) zu erreichen, etwa derart, dass die Resonanzfrequenz des schwingfähigen Systems (Flexplattenanordnung 80 + Doppelkupplung bzw. Druckplattenmodul 10) unterhalb der Leerlaufdrehzahl liegt.

Fig. 2 zeigt ein Ausführungsbeispiel einer Momentenübertragungsanordnung zur Ankopplung einer Eingangsseite der Doppelkupplung an einer Abtriebswelle der Antriebseinheit in näheren Einzelheiten. Fig. 2 zeigt speziell eine wiederum als Flexplattenanordnung bezeichenbare Momentenübertragungsanordnung 80, die entsprechend dem Beispiel der Fig. 1 ein äußeres Ringteil 90, ein Zentral- oder Nabenteil 92 und das äußere Ringteil 90 und das innere Zentral- oder Nabenteil 92 verbindende Verbindungselemente 98 und 100 aufweist. Die Verbindungselemente können mit dem äußeren Ringteil 90 bzw. dem inneren Zentral- oder Nabenteil 92 vernietet sein, wobei im Bereich der Vernietung jeweils axial wirksame Dämpfungselemente (etwa die erwähnten viskoelastischen Elemente) zwischen den genannten Komponenten angeordnet sein können, um Axialschwingungen zu dämpfen. 120 bezeichnet in Fig. 2 Befestigungsöffnungen für die Verbindungsschrauben 94. 122 bezeichnet in Fig. 2 Befestigungsöffnungen für die Verbindungsschrauben 96. Die Vernietungen der Verbindungselemente mit dem radial äußeren Flexplattenteil 90 bzw. dem radial inneren Flexplattenteil 92 sind in Fig. 2 ebenfalls mit 106 und 108 bezeichnet.

Die Verbindungselemente 98 und 100 sind jeweils streifenförmig und sich überwiegend entlang eines Radius erstreckend ausgeführt und an beiden Enden doppelt mit dem äußeren Flexplattenteil 90 vernietet. In einem mittleren Bereich sind die Verbindungselemente 98 und 100 jeweils doppelt mit einem radial vorstehenden Lappenabschnitt 124 des radial inneren Flexplattenteils doppelt vernietet. Die Flexplattenteile 90 und 92 können mit Kröpfungen ausgeführt sein, wie in Fig. 1 erkennbar.

Gemäß Fig. 2 sind zwei Verbindungsteile 98 und zwei Verbindungsteile 100 vorgesehen, die sich jeweils paarweise in einem Zwischenabschnitt zwischen dem jeweiligen, mit dem äußeren Flexplattenteil 90 vernieteten Endbereich und dem jeweiligen, mit dem inneren Flexplattenteil 92 vernieteten Mittelabschnitt überkreuzen. Trotz hinreichender axialer und taumelmäßiger Nachgiebigkeit der Flexplattenanordnung ist diese von großer Stabilität und kann insbesondere Drehmomente ohne störendes Spiel in Dreh- bzw. Umfangsrichtung übertragen.

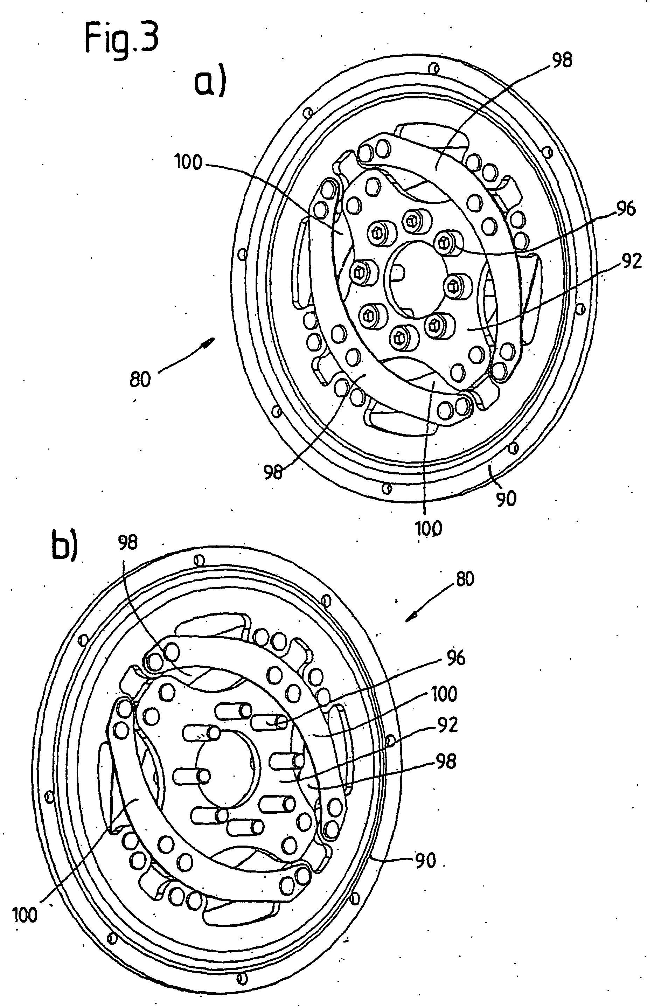

Fig. 3 zeigt in zwei perspektivischen Ansichten eine Ausführungsvariante der Flexplattenanordnung der Fig. 2. Es sind das radial äußere Ringteil 90, das radial innere Zentral- oder Nabenteil 92 und die Verbindungselemente 98 und 100 zu erkennen, sowie in Fig. 3a) die Kopfenden und in Fig. 3b) die Gewindeabschnitte der Verbindungs- oder Befestigungsschrauben 96.

Es soll noch angemerkt werden, dass man durchaus von den Komponenten der in den Figuren gezeigten Momentenübertragungsanordnung 80 nur das Ringteil 90 als Flexplatte bezeichnen könnte, und das radial innere, an der Abtriebswelle der Abtriebseinheit bzw. einem Schwungrad angebrachte bzw. anzubringende Zentral- oder Nabenteil 92 beispielsweise als Mitnehmer. Die vorzugsweise als Blattfedern ausgeführten elastischen Verbindungselemente 98 und 100 wären dann als die Flexplatte mit dem Mitnehmer verbindende Elemente aufzufassen, die der Momentenübertragungsanordnung eine gegenüber der Weichheit bzw. Elastizität der Flexplatte 90 deutlich erhöhte Weichheit und Elastizität verleihen.

Fig. 4 zeigt eine Ausführungsvariante des Ausführungsbeispiels der Fig. 1. Der einzige erwähnenswerte Unterschied ist, dass zwischen dem radial äußeren Ringteil 90 und dem radial inneren Zentral- oder Nabenteil 92 der Flexplattenanordnung 80 parallel zu den Verbindungselementen 98 und 100 wirksame Dämpfungselemente 102 wirksam sind, die Dämpfungselemente also nicht in Reihe, sondern parallel zu den Verbindungselementen geschaltet sind.

Fig. 5 zeigt ein weiteres Ausführungsbeispiel einer Doppelkupplung der Reibscheibenbauart samt zugehörigem Betätigungsmodul 200. Es ist wiederum eine mehrteilige Flexplattenanordnung 80 mit einem radial äußeren Ringteil 90 und einem radial inneren Zentral- oder Nabenteil 92 vorgesehen, das vorliegend direkt an der Abtriebswelle 84 angebracht ist. Auf ein Zwei-Massen-Schwungrad ist beim vorliegenden Ausführungsbeispiel also verzichtet. Stattdessen sind die Kupplungsscheiben 12 und 14 nicht in Drehrichtung im Wesentlichen starr, sondern als Kupplungsscheiben mit integrierten Torsionsschwingungsdämpfern 202 und 204 ausgeführt. Die beiden Flexplattenteile 90 und 92 sind wiederum durch elastische Verbindungselemente 98 und 100 miteinander verbunden, um die schon erläuterte axiale Weichheit und taumelmäßige Weichheit zu erreichen. Hinsichtlich der Verbindung des radial äußeren Ringteils 90 mit dem Kupplungsgehäuse 24 besteht gegenüber dem Ausführungsbeispiel der Fig. 1 und 4 ein Unterschied insoweit, als dass gemäß Fig. 5 eine radiale Verschraubungen durch Verbindungsschrauben 94' vorgesehen ist, die zwischen einem sich axial erstreckenden Bundabschnitt 206 des Ringteils 90 und dem ersten Gehäuseteil 26 wirken. Die radiale Verschraubung gemäß Fig. 5 ermöglicht eine besonders einfache Montage durch wenigstens eine zugeordnete Öffnung 208 in der Getriebegehäuseglocke 210. Vorzugsweise sind am Umfang verteilt mehrere derartige Öffnungen 208 vorzusehen, um bei der Montage ein Weiterdrehen des Motors zu begrenzen oder zu vermeiden.

Das Betätigungsmodul weist eine am Getriebegehäuse insbesondere gegen ein Verdrehen gesicherte Zentralhülse 220 auf, die eine Außenhülse 222 und eine Innenhülse 224 trägt. Die Außenhülse 222 und die Innenhülse 224 stehen jeweils über ein Außengewinde bzw. Innengewinde mit der Zentralhülse 220 in Eingriff, derart, dass eine Verdrehung der Außenhülse oder/und der Innenhülse relativ zur Zentralhülse eine axiale Verlagerung der betreffenden Hülse (Außenhülse bzw. Innenhülse) induziert. Die Aüßenhülse 222 ist mit einem Ausrücklager 226 versehen, und die Innenhülse 224 ist mit einem Ausrücklager 228 versehen, über die unter Vermittlung der Außenhülse bzw. Innenhülse axiale Kräfte auf die Membranfederzungen der Membranfeder 40 bzw. 60 ausgeübt werden können, um die Betätigungszungen der jeweiligen Membranfeder in Richtung zur Antriebseinheit auszulenken und damit die erste oder/und zweite Kupplungsanordnung in Ausrückrichtung zu betätigen. Um der Außenhülse und der Innenhülse eine entsprechende Drehbewegung in Ausrückrichtung bzw. Einrückrichtung zu erteilen, können die Hülsen beispielsweise mit radial vorstehenden Hebelarmen ausgeführt sein, auf die ein jeweils zugeordnetes Stellglied wirkt.

Um einen geschlossenen Axialkraftfluss innerhalb des die eigentliche Doppelkupplung 10 und das Betätigungsmodul 200 umfassenden Baueinheit vorzusehen, steht die Zentralhülse 220 mit dem zweiten Gehäuseteil 28, das über die Stützringe 42 und 44 und die Positionier- oder Haltebolzen 46 die erste Membranfeder 40 hält, in axialer Abstützbeziehung. Hierzu erstreckt sich das zweite Gehäuseteil 28 radial weiter nach innen bis zu einem Radial- und Axiallager 230, das radial zwischen der Zentralhülse 220 und einem Innenumfang eines Ringabschnitts 232 des Gehäuseteils 28 gehalten ist und axial durch Ringbünde bzw. Sicherungsringe oder dergleichen am Ringabschnitt 232 und der Zentralhülse 220 gesichert ist.

Ein wichtiger Aspekt des Ausführungsbeispiels bzw. des diesem Ausführungsbeispiel zugrunde liegenden Konstruktionsgedankens ist, dass aufgrund des geschlossenen Axialkraftflusses innerhalb des die eigentliche Doppelkupplung 10 und das Betätigungsmodul 200 umfassenden Gesamtmoduls im Zusammenhang mit der Kupplungsbetätigung keine Axialkräfte auf die Abtriebswelle, insbesondere Kurbelwelle 84, der Antriebseinheit wirken, die deren Lager übermäßig belasten könnten. Die axiale Abstützung wird vorteilhaft durch ein zwischen der eigentlichen Kupplungseinrichtung einerseits und der zugehörigen Betätigungseinheit andererseits wirksames zentrales Stützlager, im Beispielsfall das Lager 230, vermittelt.

Das Betätigungsmodul 200 wird, wie schon angedeutet, vor der Eingliederung der Doppelkupplung in Antriebsstrang mit der eigentlichen Doppelkupplung 10 zu einer Baueinheit verbunden und kann dann als eine Baueinheit getriebeseitig in der Getriebeglocke, also getriebeseitig, vormontiert werden. Motorseitig sitzt die Flexplattenanordnung 80 vormontiert am Koppelende der Abtriebswelle 84, insbesondere Kurbelwelle 84. Bei der Montage des Getriebes am Motor fahren dann das Kupplungsmodul und die Flexplattenanordnung 80 aufeinander und können dann über die wenigstens eine Öffnung 208 in der Getriebeglocke miteinander verbunden werden.

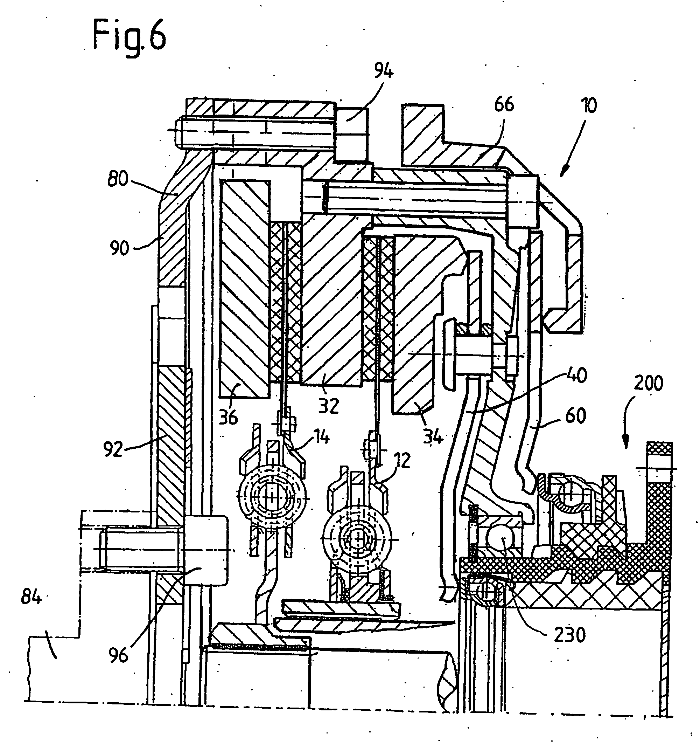

Fig. 6 zeigt ein weiteres Ausführungsbeispiel einer mittels einer Flexplattenanordnung 80 an einer Kurbelwelle 84 angebundenen Doppelkupplung 10 der Reibscheibenbauart. Realisiert ist die in Fig. 3 besonders gut erkennbare konventionelle Anbindung, bei der der Mitnehmer bzw. das Zentralteil 92 mittels mehrerer, vorzugsweise auf einem Teilkreis angeordneten Schrauben 96 am Koppelende der Kurbelwelle 84 angeschraubt ist. Die Befestigung der Schrauben müsste über mehrere Durchgriffe innerhalb des Kupplungsmoduls erfolgen, wenn man das von der Doppelkupplung 10 und dem Betätigungsmodul 200 sowie der Flexplattenanordnung 80 gebildete Gesamtmodul als eine Baueinheit im Antriebsstrang montieren möchte. Im Falle der in Fig. 6 gezeigten Anordnung können derartige Durchgriffe kaum bereitgestellt werden, da die Schrauben 96 etwa aus dem gleichen Radius wie das zentrale Stützlager 230 liegen. Es könnte höchstens in Betracht kommen, die Doppelkupplung 10 samt daran schon angebrachter Flexplattenanordnung 80 ohne das damit noch nicht verbundene Betätigungsmodul 200 als eine Baueinheit an der Kurbelwelle 84 zu montieren. Hierzu müssten die Kupplungsscheiben 12 und 14 entsprechende Durchgriffe aufweisen. Da die Kupplungsscheiben mit Torsionsschwingungsdämpfern ausgeführt sind, ist die Bereitstellung derartiger Durchgriffe zwar nicht unmöglich, aber konstruktiv nicht ideal.

Demgegenüber werden im Folgenden Beispiele von Momentenübertragungsanordnungen, speziell Flexplattenanordnungen, vorgestellt, die einerseits die vorstehend erläuterte axiale und taumelmäßige Weichheit bzw. Elastizität aufweisen, andererseits form- oder reibschlüssig in Kombination mit einem einzelnen Befestigungselement, speziell einer einzigen Schraube, an der Abtriebswelle der Antriebseinheit (speziell an der Kurbelwelle eines Verbrennungsmotors) angebracht werden können, um eine Kraftfahrzeugkupplung (insbesondere eine Doppelkupplung) axial weich und ohne großen Montageaufwand an der Abtriebswelle anzubinden. Grundsätzlich kommt es auch in Betracht, die Fahrzeugkupplung an einem Einfach-Schwungrad oder Zwei-Massen-Schwungrad mittels einer entsprechenden erfindungsgemäßen Momentenübertragungsanordnung, ggf. Flexplattenanordnung, anzubinden. Ein wesentlicher Gesichtspunkt ist die zentrale Anordnung eines oder ggf. auch mehrerer Befestigungselemente koaxial oder in enger Nähe zur Drehachse der Kupplung, so dass das (jeweilige) Befestigungselement durch einen die Getriebeeingangswelle bzw. Getriebeeingangswellen aufnehmenden Zentralkanal der Kupplung bzw. der Einbau-Baueinheit montiert werden kann bzw. zugänglich ist

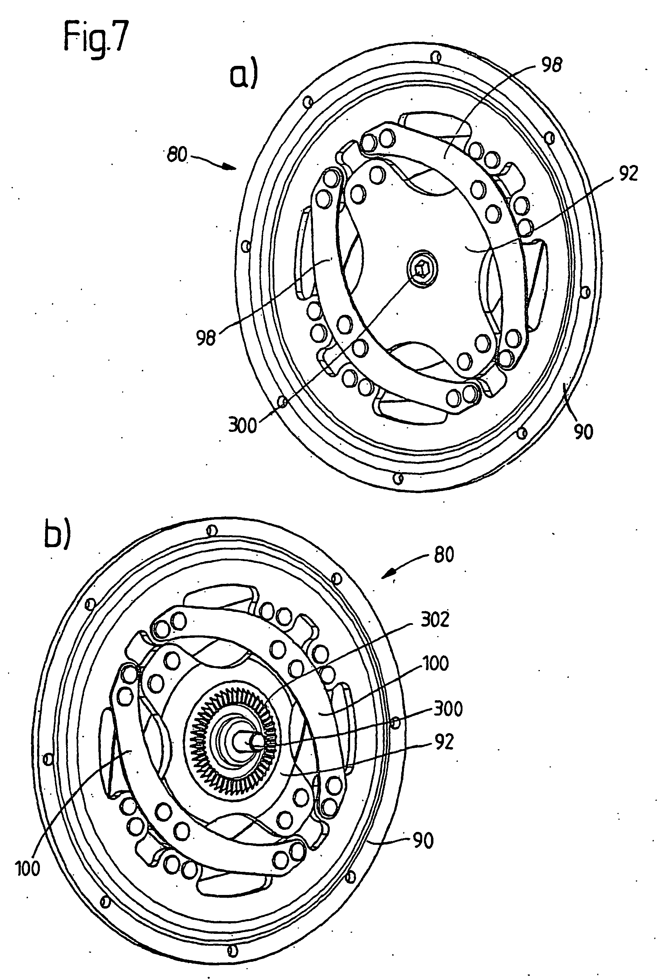

Die Flexplattenanordnung der Fig. 7 entspricht hinsichtlich der axialweichen bzw. taumelweichen Ausbildung im Wesentlichen dem Beispiel der Fig. 3. Anstelle durch mehrere, auf einem Radius angeordnete Befestigungsschrauben 96 wird das Zentralteil bzw. der Mitnehmer 92 gemäß Fig. 7 mittels eines einzigen Befestigungselements, hier speziell mittels einer einzigen Schraube 300, an der Abtriebswelle befestigt, wobei die Schraube 300 Mitnahmeformationen an dem Zentralteil 92 und zugeordnete Gegen-Mitnahmeformationen an der Abtriebswelle in gegenseitigem Drehmitnahmeeingriff hält. Beim Ausführungsbeispiel sind die Mitnahmeformationen beispielsweise als Hirth-Verzahnung 302 ausgeführt. In Betracht kommt beispielsweise auch eine vorzugsweise spielfreie SAE-Verzahnung. Die Befestigungsschraube 300 hält das Zentralteil 92 axial fest an einer Stirnfläche des Koppelendes der Kurbelwelle, so dass die Mitnahmeformationen vorzugsweise völlig drehspielfrei in gegenseitigem Drehmitnahmeeingriff gehalten werden.

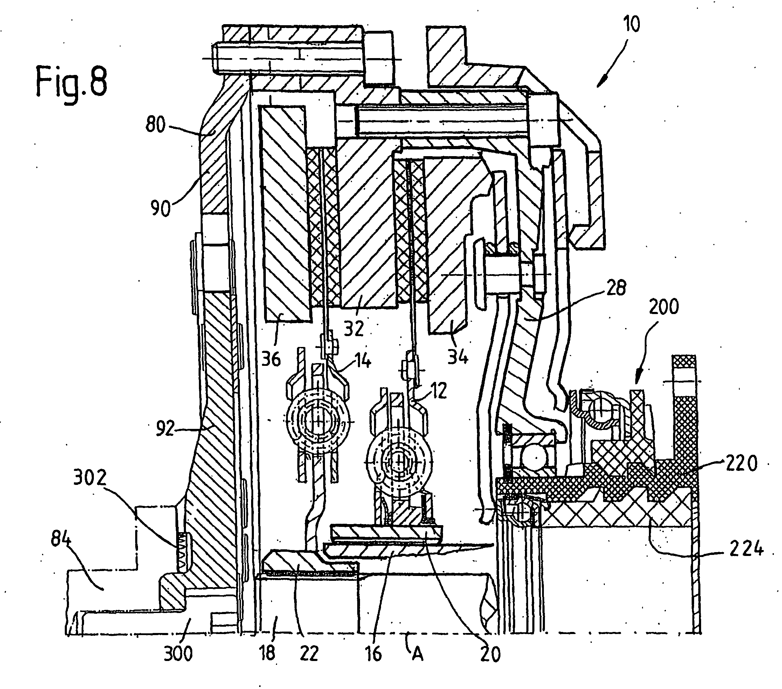

Fig. 8 zeigt eine typische Einbausituation für die Flexplattenanordnung 80 der Fig. 7. Die Doppelkupplung 10 ist mittels der Flexplattenanordnung 80 an der Kurbelwelle 84 angebunden, wobei gemäß der hier verwendeten Nomenklatur eine so genannte "Zentralanbindung" realisiert ist, bei der nur ein einziges zusätzliches Befestigungselement, nämlich die Schraube 300, verwendet wird, die vorliegend koaxial zur Drehachse A angeordnet ist und die Mitnahmeformationen, hier Verzahnungen 302, in gegenseitigem Drehmitnahmeeingriff hält. Wie ohne weiteres in der Figur zu erkennen, ist bei geöffnetem Antriebsstrang, also in einem Zustand, in dem die Antriebseinheit und das Getriebe 90 noch nicht bzw. nicht mehr verbunden sind, die Befestigungsschraube 300 durch einen durch den Innenumfang der Innenhülse 224, den Innenumfang der Koppelnabe 20 der ersten Kupplungsscheibe 12 und den Innenumfang der Koppelnabe 22 der zweiten Kupplungsscheibe 14 definierten Zentralkanal der an der Antriebseinheit angeordneten, von der Doppelkupplung 10, der Flexplattenanordnung 80 und dem Betätigungsmodul 200 gebildeten Einheit aus axialer Richtung zugänglich, etwa um für Wartungs- oder Reparaturzwecke diese Einheit von der Antriebseinheit zu demontieren. Umgekehrt lässt sich zur Montage der Einheit an der Antriebseinheit die Befestigungsschraube 300 durch diesen Zentralkanal in das Koppelende der Kurbelwelle 84 einschrauben.

Bereitgestellt ist also eine die Doppelkupplung 10 umfassende, vormontierte Einbau-Baueinheit, die die Flexplattenanordnung 80, die eigentliche Doppelkupplung 10 samt den Kupplungsscheiben und das mit dem Gehäuseabschnitt 28 schon verbundene Betätigungsmodul 200 umfasst. Aufgrund der formschlüssigen Zentralanbindung (alternativ kommt auch eine reibschlüssige Zentralanbindung in Betracht, die noch anhand der Fig. 1 erläutert wird) kann die Einbau-Baueinheit an der Abtriebswelle ohne großen Montageaufwand angebunden, insbesondere angeschraubt werden, und zwar unter Ausnutzung des den erforderlichen Zugang gebenden Zentralkanals. Eine derartige vormontierte Einbau-Baueinheit bräuchte im Getriebe überhaupt nicht mehr axial fixiert werden, so dass jegliche axialen Passprobleme vermieden sind. Im Falle eines Betätigungsmoduls von der Spindeltrieb-Bauweise, beispielsweise des Moduls 200, sollte aber für das axial feststehende Stützteil, d. h. die Zentralhülse 220 beim gezeigten Ausführungsbeispiel, eine Verdrehsicherung in Umfangsrichtung relativ zum Getriebegehäuse vorgesehen werden.

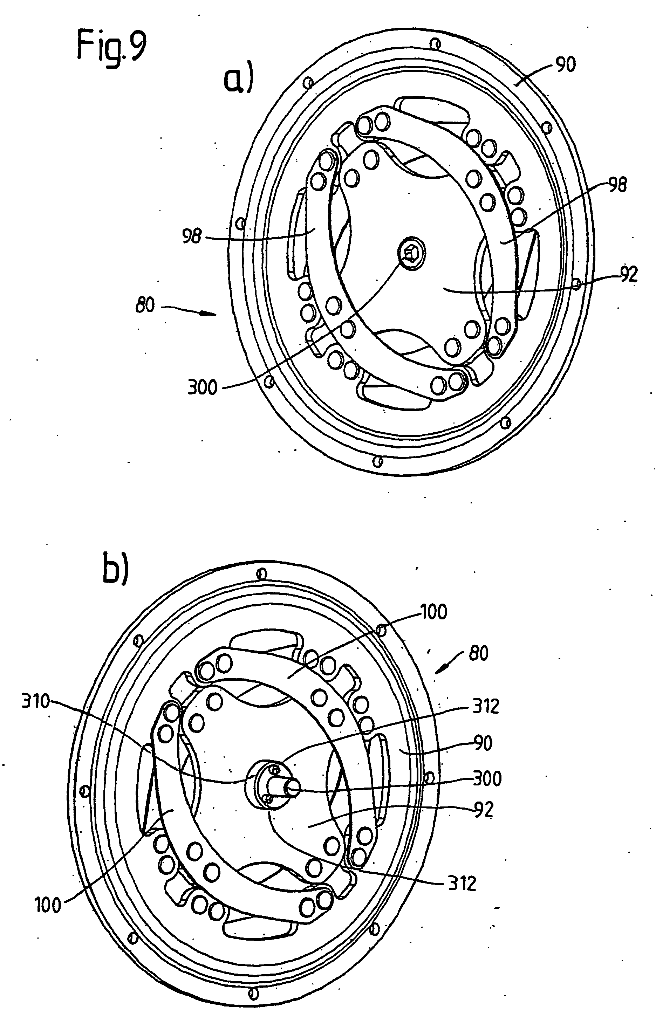

Bei der Ausführungsvariante der Fig. 9 ist wiederum genau eine zentrale Befestigungsschraube 300 zum Anbringen des Zentralteils 92 an der Kurbelwelle (oder alternativ an einem Schwungrad, ggf. Zwei-Massen-Schwungrad) vorgesehen. Anstelle von Verzahnungen sind an einer topfförmigen Ausformung 310 des Zentralteils 92 zwei azentrisch angeordnete Zapfen oder Stifte 312 vorgesehen, die sich in axialer Richtung erstrecken und im montierten Zustand in zugeordnete Aufnahmeöffnungen des Koppelendes der Abtriebswelle bzw. des Schwungrads eingreifen und so die Drehmitnahmeverbindung zwischen dem Zentralteil 92 und der Abtriebswelle herstellen. Grundsätzlich reicht ein einziger azentrisch angeordneter Drehmitnahmevorsprung aus. Es können selbstverständlich auch mehr als zwei derartige Vorsprünge (insbesondere Stifte oder Zapfen) vorgesehen sein.

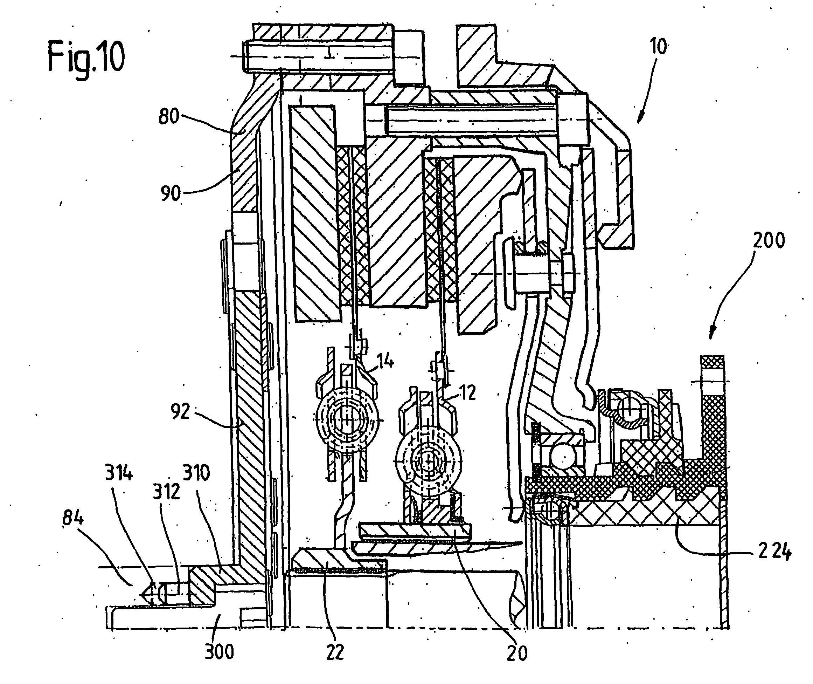

Fig. 10 zeigt die Einbausituation für das Ausführungsbeispiel der Fig. 9. Die Doppelkupplung 10 ist unter Vermittlung der Zentralschraube 300 und der in eine jeweilige Aufnahme 314 der Abtriebswelle 84 eingreifende Zapfen 312 drehfest an der Abtriebswelle 84 angebracht. Es werden die im Zusammenhang mit der Fig. 8 erläuterten Vorteile erreicht.

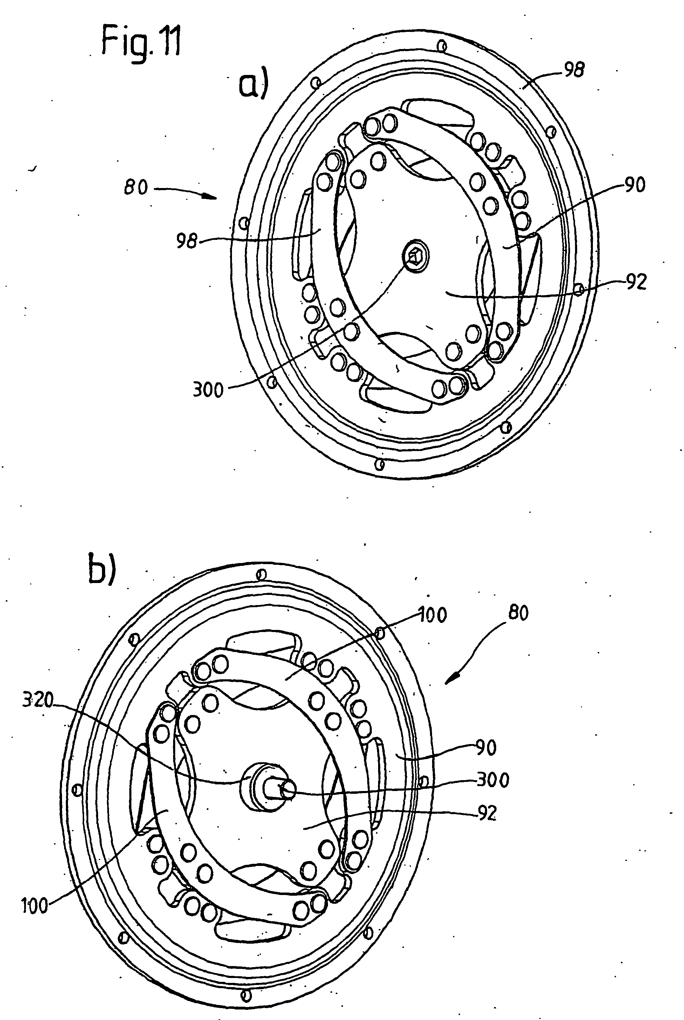

Bei der Ausführungsvariante der Fig. 11 weist das Zentralteil bzw. der Mitnehmer 92 einen konusförmigen, ggf. als Klemmkonus oder Spannkonus bezeichenbaren Abschnitt 320 auf, der im Falle einer Ausführung des Zentralteils 92 aus Blechmaterial aus dem Blechmaterial herausgeformt sein kann. Im montierten Zustand greift dieser Konusabschnitt 320 in eine entsprechende konische Bohrung oder Aussparung im Koppelende der Abtriebswelle bzw. des Schwungrads ein. Durch die entsprechend angezogene Zentralschraube 300 werden die konische Außenumfangsfläche des Abschnitts 320 und eine entsprechende konische Innenumfangsfläche der Bohrung (oder allgemein der Aussparung) in gegenseitigem reibschlüssigen Eingriff gehalten. Durch entsprechende Ausgestaltung der Reibschluss-Eingriffsflächen und entsprechendes Anziehen der Zentralschraube, also entsprechendes axiales Anpressen des Zentralteils 92 an das Koppelende bzw. das Schwungrad, kann ein derartiger Reibschluss hergestellt und aufrecht erhalten werden, dass die im Betrieb auftretenden Drehmomente ohne Drehspiel zwischen der Antriebseinheit und der Kupplungseinrichtung und damit zwischen der Antriebseinheit und dem Getriebe (bei den Ausführungsbeispielen insbesondere Doppelkupplungs- bzw. Lastschaltgetriebe) übertragen werden können.

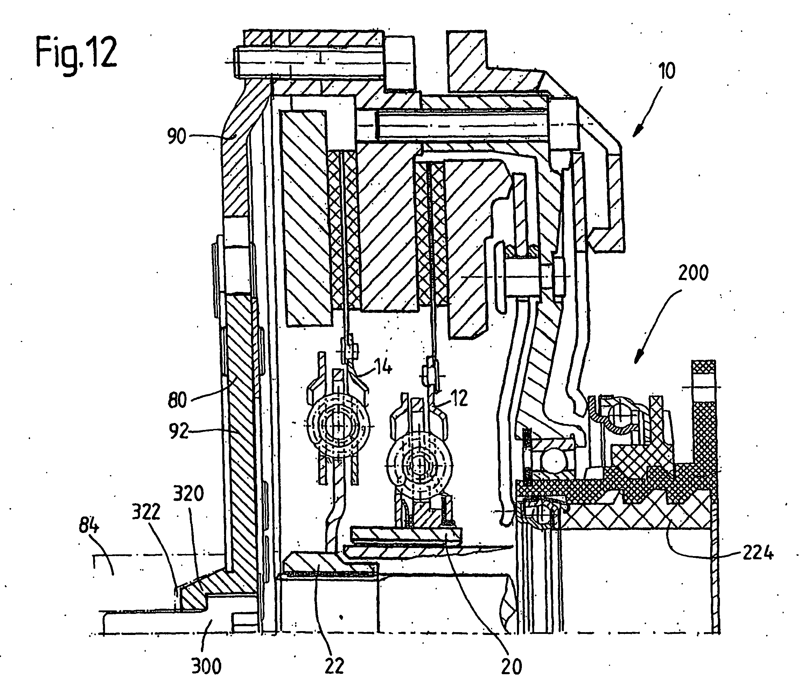

Fig. 12 zeigt ein Beispiel für eine Einbausituation für die Flexplattenanordnung 80 der Fig. 11. Zu erkennen ist, wie der konische Vorsprung bzw. Abschnitt 320 des Zentralteils 92 in eine zugeordnete konische Aussparung 322 der Kurbelwelle 84 eingreift, wobei ein geringfügig unterschiedlicher Neigungswinkel der konischen Außenumfangsfläche des Abschnitts 320 und der konischen Innenumfangsfläche der Aussparung 322 auffällt. Hierdurch wird eine starke Verklemmung mit entsprechend starkem Reibschluss zwischen den genannten Flächen erreicht.

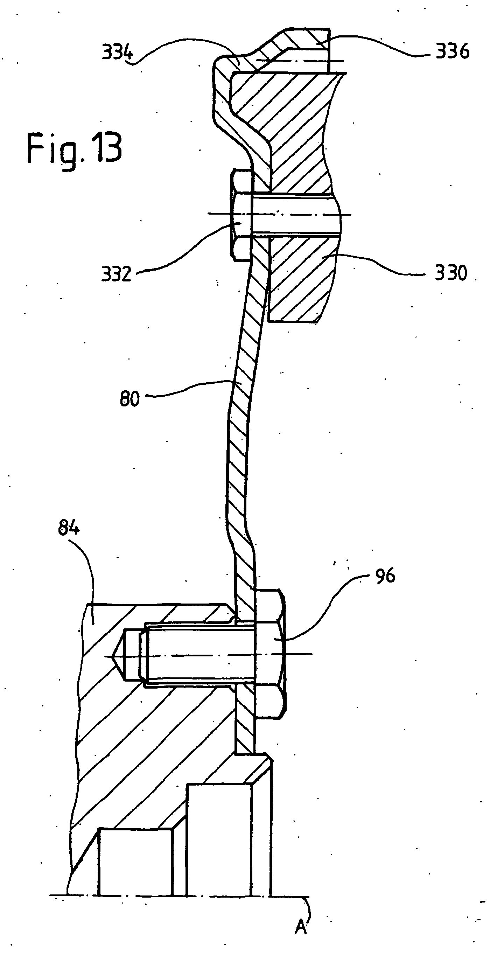

Fig. 13 zeigt eine im Prinzip beliebig, beispielsweise herkömmlich ausgeführte Flexplatte 80, die mittels Verbindungselementen, insbesondere Schrauben 96, an der Abtriebswelle 84 drehfest angebracht ist. Die Schrauben 96 sind auf einem Radius in deutlichem Abstand von der Drehachse A angeordnet, so dass keine Zentralanbindung im Sinne der Nomenklatur in dieser Anmeldung realisiert ist. An der Flexplatte 80 kann eine Schwungmasse 330 mittels wenigstens einem Verbindungselement 332, insbesondere wenigstens einer Schraube 332, befestigt sein. Die Flexplatte trägt radial außen einen aus einem sich in axialer Richtung erstreckenden Bundabschnitt 334 herausgeformten Anlasserzahnkranz 336. Der Anlasserzahnkranz kann beispielsweise in das Blechmaterial der Flexplatte 80 eingerollt sein. Es können auch noch weitere Blechbereiche aus der Flexplatte herausgeformt sein, um z. B. OT-Markierungen (OT = oberer Totpunkt) für die Motorsteuerung bereizustellen.

Ein wesentlicher Vorteil der erläuterten Ausgestaltung der Flexplatte ist die einteilige und damit kostengünstige Darstellung des Anlasserzahnkranzes. Überdies werden Probleme vermieden, die bei der Anbringung eines gesondert hergestellten Zahnkranzes an einer Flexplatte entstehen könnten.

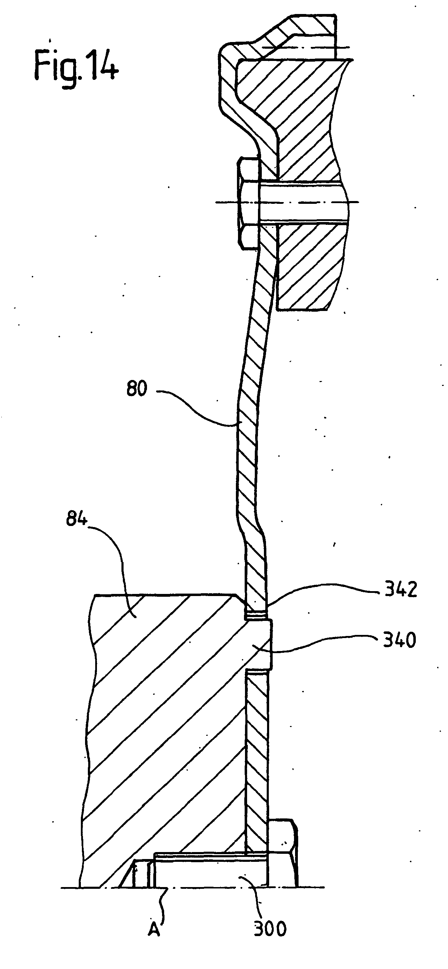

Fig. 14 zeigt eine Ausführungsvariante der Flexplatte der Fig. 13. Gegenüber der Flexplatte der Fig. 13 ist bei der Flexplatte 80 der Fig. 14 die erfindungsgemäße Zentralanbindung der Flexplatte an der Abtriebswelle, insbesondere Kurbelwelle 84, realisiert. Es ist eine Zentralschraube 300 vorgesehen, die koaxial zur Drehachse angeordnet ist und die Flexplatte axial fest an der Kurbelwelle 84 bzw. deren Koppelende hält. Hierdurch wird wenigstens ein azentrisch angeordneter Zapfenvorsprung 340 des Koppelendes im Eingriff mit einer Öffnung 342 der Flexplatte gehalten. Die Abmessungen des Zapfenvorsprungs 340 in der zur Drehachse A orthogonallen Ebene und die Abmessungen der Öffnung 342 in dieser Ebene sind derart aufeinander abgestimmt, dass eine im Wesentlichen drehspielfreie Drehmitnahmeverbindung zwischen der Flexplatte 80 und der Kurbelwelle 84 gewährleistet ist.

Es ist ohne weiteres möglich, bei einer "einfachen" Flexplatte wie die Flexplatte 80 der Fig. 13 und 14 auch eine andere Art der Zentralanbindung vorzusehen, und zwar sowohl eine andere formschlüssige als auch eine andere reibschlüssige Zentralanbindung, beispielsweise mittels Mitnahmeformationen, speziell Verzahnungen, oder mittels einer Kombination aus einem zentralen Klemm- oder Spannkonus und einer zugeordneten Klemm- oder Spannaussparung.

## Patentansprüche

1. Kraftfahrzeug-Antriebsstrang mit einer zwischen einer Antriebseinheit und einem Getriebe angeordneten Mehrfach-Kupplungseinrichtung, insbesondere Doppel-Kupplungseinrichtung (10), zur Momentenübertragung zwischen der Antriebseinheit und dem Getriebe, wobei die Kupplungseinrichtung eine einer ersten Getriebeeingangswelle (16) zugeordnete erste Kupplungsanordnung (12, 32, 34) und eine einer zweiten Getriebeeingangswelle (18) zugeordnete zweite Kupplungsanordnung (14, 32, 36) umfasst, wobei die Getriebeeingangswellen im Wesentlichen koaxial zu einer Drehachse (A) der Kupplungseinrichtung angeordnet sind, wobei eine Eingangsseite der Kupplungseinrichtung über eine Momentenübertagungsanordnung (80) mit einem Koppelende einer Abtriebswelle (84) der Antriebseinheit direkt oder indirekt gekoppelt ist, und wobei die Momentenübertragungsanordnung einen radial äußeren Anbindungsbereich (90) zu Anbindung an der Kupplungseinrichtung und einen radial inneren Anbindungsbereich (92) zur direkten oder indirekten Anbindung an dem Koppelende aufweist, wobei
die Momentenübertragungsanordnung unter Vermittlung wenigstens eines den radial inneren Anbindungsbereich (92) mit dem Koppelende oder einer am Koppelende drehfest anbrachten Komponente oder Baugruppe formschlüssig verbindenden, den radial inneren Anbindungsbereich (92) am Koppelende bzw. der Komponente oder Baugruppe axial sicherenden Formschluss-Verbindungs elements (300) drehfest angebunden ist,
**dadurch gekennzeichnet, dass** die Mehrfachkupplungseinrichtung eine Flexplattenanordnung aufweist über die sie an der Antriebsachse einer Antriebseinheit angebunden ist und die Flexplattenanordnung ein äußeres Flexplattenbauteil und ein inneres Flexplattenbauteil aufweist und über als Federn ausgeführte Verbindungsanordnungen sowohl eine Verkippung dieser Teile ermöglicht als auch eine axial elastische Weichheit oder Nachgiebigkeit aufweist

2. Antriebsstrang nach Anspruch 1, **dadurch gekennzeichnet, dass** das äußere Flexplattenteil und / oder das innere Flexplattenteil als Blechteile ausgeführt ist.

3. Antriebstrang nach Anspruch 1 oder 2, **dadurch gekennzeichnet, dass** die Verbindungselemente als dünne Stahlblechstreifen oder Blattfedern ausgeführt sind.

4. Antriebsstrang nach Anspruch 1, **dadurch gekennzeichnet, dass** mindestens eine der Kupplungsanordnungen nach dem Normalerweise-Offen-Prinzip ausgeführt ist.

5. Antriebsstrang nach Anspruch 1, **dadurch gekennzeichnet, dass** der Axialkraftfluss zur Betätigung zur Betätigung einer Kupplungsanordnung innerhalb des Kupplungsmoduls geschlossen ist.

6. Antriebsstrang nach Anspruch 1 oder Anspruch 4, **dadurch gekennzeichnet, dass** das Kurbelwellenaxiallager bei Betrieb der Kupplungsanordnung nicht infolge einer Krafteinwirkung durch das Betätigungsmodul belastet wird.

7. Antriebsstrang nach Anspruch 1, **dadurch gekennzeichnet, dass** ein das Kupplungsmodul und das Betätigungsmodul umfassendes Komplettmodul bei der Eingliederung in den Antriebsstrang entweder motorseitig oder getriebeseitig vormontiert wird.

8. Antriebsstrang nach Anspruch 1, **dadurch gekennzeichnet, dass** motorseitig und kupplungsseitig rotationssymetrisch angeordnete Befestigungsbohrungen vorgesehen sind.

9. Antriebsstrang nach Anspruch 1, **dadurch gekennzeichnet, dass** durch die axial weiche Entkoppelung die Resonanzfrequenz des schwingungfähigen Systems Flexplattenanordnung und Doppelkupplung und Druckplattenmodul soweit verstimmt wird, dass diese unterhalb der Anregungsfrequenz des Motors liegt.

10. Antriebsstrang nach Anspruch 1, **dadurch gekennzeichnet, dass** die Kupplungseinheit über ein Zwei-Massenschwungrad motorseitig angebunden ist.

## Claims

1. Motor-vehicle drive train having a multiple clutch device, in particular dual clutch device (10), which is arranged between a drive unit and a transmission for torque transmission between the drive unit and the transmission, the clutch device comprising a first clutch arrangement (12, 32, 34) which is assigned to a first transmission input shaft (16) and a second clutch arrangement (14, 32, 36) which is assigned to a second transmission input shaft (18), the transmission input shafts being arranged substantially coaxially with respect to a rotational axis (A) of the clutch device, an input side of the clutch device being coupled directly or indirectly via a torque transmission arrangement (80) to a coupler end of an output shaft (84) of the drive unit, and the torque transmission arrangement having a radially outer connecting region (90) for connection to the clutch device and a radially inner connecting region (92) for direct or indirect connection to the coupler end, the torque transmission arrangement being connected fixedly in terms of rotation via at least one form-fitting connecting element (300) which connects, with a form-fitting connection, the radially inner connecting region (92) to the coupler end or a component or assembly which is attached fixedly in terms of rotation to the coupler end, and which axially secures the radially inner connecting region (92) at the coupler end or the component or assembly, **characterized in that** the multiple clutch device has a flexiplate arrangement, via which it is connected to the drive axle of a drive unit, and the flexiplate arrangement has an outer flexiplate component and an inner flexiplate component and both makes possible a tilting of these parts via connecting arrangements configured as springs and also has an axially elastic softness or resilience.

2. Drive train according to Claim 1, **characterized in that** the outer flexiplate part and/or the inner flexiplate part are/is configured as sheet metal parts.

3. Drive train according to Claim 1 or 2, **characterized in that** the connecting elements are configured as thin steel-sheet strips or leaf springs.

4. Drive train according to Claim 1, **characterized in that** at least one of the clutch arrangements is configured according to the "normally open" principle.

5. Drive train according to Claim 1, **characterized in that** the axial force flow for actuating a clutch arrangement is closed within the clutch module.

6. Drive train according to Claim 1 or Claim 4, **characterized in that**, during operation of the clutch arrangement, the crankshaft axial bearing is not loaded as a consequence of the action of forces by the actuation module.

7. Drive train according to Claim 1, **characterized in that** a complete module which comprises the clutch module and the actuation module is preassembled either on the engine side or on the transmission side when it is incorporated into the drive train.

8. Drive train according to Claim 1, **characterized in that** fastening holes which are arranged in a rotationally symmetrical manner are provided on the engine side and the clutch side.

9. Drive train according to Claim 1, **characterized in that** the resonant frequency of the oscillating system of the flexiplate arrangement and the dual clutch and the pressure-plate module is changed by the axially soft decoupling to such an extent that it lies below the excitation frequency of the engine.

10. Drive train according to Claim 1, **characterized in that** the clutch unit is connected on the engine side via a two-mass flywheel.

## Revendications

1. Transmission pour véhicule automobile comprenant un dispositif d'embrayage multiple disposé entre une unité d'entraînement et une boîte de vitesses, en particulier un dispositif d'embrayage double (10) pour le transfert du couple entre l'unité d'entraînement et la boîte de vitesses, le dispositif d'embrayage comprenant un premier agencement d'embrayage (12, 32, 34) associé à un premier arbre d'entrée de boîte de vitesses (16) et un deuxième agencement d'embrayage (14, 32, 36) associé à un deuxième arbre d'entrée de boîte de vitesses (18), les arbres d'entrée de boîte de vitesses étant disposés essentiellement coaxialement à un axe de rotation (A) du dispositif d'embrayage, un côté d'entrée du dispositif d'embrayage étant accouplé directement ou indirectement par le biais d'un agencement de transfert de couple (80) à une extrémité d'accouplement d'un arbre de prise de force (84) de l'unité d'entraînement, et l'agencement de transfert de couple présentant une région de liaison (90) radialement externe pour la liaison au dispositif d'embrayage et une région de liaison (92) radialement interne pour la liaison directe ou indirecte à l'extrémité d'accouplement,
l'agencement de transfert de couple étant relié fixe en rotation par l'intermédiaire d'au moins un élément de liaison par engagement positif (300) reliant par engagement positif la région de liaison (92) radialement interne à l'extrémité d'accouplement ou à un composant ou module monté fixe en rotation à l'extrémité d'accouplement, fixant axialement la région de liaison (92) radialement interne à l'extrémité d'accouplement ou au composant ou module,
**caractérisée en ce que**
le dispositif d'embrayage multiple présente un agencement de plateau flexible par le biais duquel il est relié à l'axe d'entraînement d'une unité d'entraînement et l'agencement de plateau flexible présente un composant de plateau flexible externe et un composant de plateau flexible interne et permet, par le biais d'agencements de connexion réalisés sous forme de ressorts, un basculement de ces parties, et présente aussi une souplesse ou une flexibilité élastique axiale.

2. Transmission selon la revendication 1, **caractérisée en ce que** la partie de plateau flexible externe et/ou la partie de plateau flexible interne sont réalisées sous forme de pièce en tôle.

3. Transmission selon la revendication 1 ou 2, **caractérisée en ce que** les éléments de connexion sont réalisés sous forme de minces rubans de tôle d'acier ou sous forme de ressorts à lames.

4. Transmission selon la revendication 1, **caractérisée en ce qu'**au moins l'un des agencements d'embrayage est réalisé selon le principe normalement ouvert.

5. Transmission selon la revendication 1, **caractérisée en ce que** le flux de force axial pour l'actionnement d'un agencement d'embrayage est fermé à l'intérieur du module d'embrayage.

6. Transmission selon la revendication 1, ou selon la revendication 4, **caractérisée en ce que** le palier axial du vilebrequin n'est pas chargé par le module d'actionnement du fait d'une application de force lors du fonctionnement de l'agencement d'embrayage.

7. Transmission selon la revendication 1, **caractérisée en ce qu'**un module complet comprenant le module d'embrayage et le module d'actionnement est prémonté du côté du moteur ou du côté de la boîte de vitesses lors de l'intégration dans la transmission.

8. Transmission selon la revendication 1, **caractérisée en ce que** l'on prévoit du côté du moteur et du côté de l'embrayage des alésages de fixation disposés à symétrie de révolution.

9. Transmission selon la revendication 1, **caractérisée en ce que** la fréquence de résonance du système oscillant constitué de l'agencement de plateau flexible, de l'embrayage double et du module de plateau de pression, est désaccordée de telle sorte que celle-ci se trouve en dessous de la fréquence d'excitation du moteur.

10. Transmission selon la revendication 1, **caractérisée en ce que** l'unité d'embrayage est reliée du côté du moteur par le biais d'une roue volante à deux masses.
